Europäisches Patentamt

European Patent Office

Office européen des brevets

(19)

(11)  EP 0 898 061 B1

(12)  **EUROPÄISCHE PATENTSCHRIFT**

(45) Veröffentlichungstag und Bekanntmachung des Hinweises auf die Patenterteilung:
**17.03.2004   Patentblatt 2004/12**

(51) Int Cl.$^7$: **F01N 3/20**

(21) Anmeldenummer: **98114698.8**

(22) Anmeldetag: **05.08.1998**

(54) **Verfahren zur Dosierung eines Reduktionsmittels in stickoxidhaltiges Abgas einer Brennkraftmaschine**

Process for metering a reducing agent to the nitrogen-oxide containing exhaust gas of an internal combustion engine

Procédé de dosage d'un agent de réduction dans le gaz d'échappement d'un moteur à combustion interne contenant de l'oxyde d'azote

(84) Benannte Vertragsstaaten:
**DE FR GB IT NL SE**

(30) Priorität: **21.08.1997   DE 19736384**

(43) Veröffentlichungstag der Anmeldung:
**24.02.1999   Patentblatt 1999/08**

(73) Patentinhaber: **MAN NUTZFAHRZEUGE AG**
**80995 München (DE)**

(72) Erfinder:
• **Zuther, Frank, Dipl.-Ing.**
  **91126 Schwabach (DE)**
• **Emmerling, Gerhard, Dipl.-Ing.**
  **92342 Sulzkirchen (DE)**
• **Döring, Andreas**
  **91077 Neukirchen (DE)**

(56) Entgegenhaltungen:
**DE-A- 3 721 572        DE-A- 4 315 278**

**Beschreibung**

Die Erfindung betrifft gemäß dem Oberbegriff des Anspruches 1 ein Verfahren zur Dosierung eines Reduktionsmittels, insbesondere Harnstoff bzw. wässrige Harnstofflösung, in stickoxidhaltiges Abgas einer Brennkraftmaschine räumlich in die Abgasleitung vor einem Katalysator mit wenigstens $NO_x$- Reduktionsaktivität, der eine geringe Wärmekapazität und keine ausgeprägte Reduktionsmittelspeicheraktivität aufweist.

Bei der selektiven katalytischen Reduktion (SCR) von $NO_x$ muß je nach Betriebszustand der Brennkraftmaschine und des SCR-Katalysators eine bestimmte Menge Reduktionsmittel in den Abgasstrom eindosiert werden, um $NO_x$ zu $N_2$ zu reduzieren. Wird zu wenig Reduktionsmittel eindosiert, so sinkt der Reduktionsgrad unnötig. Wird zuviel Reduktionsmittel eindosiert, so kommt es zum Schlupf von Reduktionsmittel sowie unerwünschten Zwischen- und Spaltprodukten. Außerdem resultiert daraus ein unnötig hoher Verbrauch an Reduktionsmittel. Falls als Reduktionsmittel Harnstoff verwendet wird, bedeutet dies, daß Ammoniakdurchbrüche, oder, wenn dem SCR-Katalysator ein Oxidationskatalysator nachgeschaltet ist, Emissionen von Distickstoffoxid $N_2O$ auftreten können.

EP 0 515 857 A1 sowie EP 0 697 062 B1 sind Verfahren, die beide auf der Speicherfähigkeit des Katalysators und einer zeitweisen überstöchiometrischen Dosierung des Reduktionsmittels beruhen.

So wird in der EP 0 697 062 B1 ein Verfahren zur Dosierung eines Reduktionsmittels in ein stickoxidhaltiges Abgas eines Verbrennungsmotors mit einem in einer Abgasleitung eingebauten Katalysator zur Stickoxidminderung beschrieben, bei dem die in das Abgas eingebrachte Reduktionsmittelrate in Abhängigkeit von betriebsrelevanten Parametern des Abgases, des Katalysators und ggf. des Motors eingestellt wird. Als betriebsrelevante Parameter des Abgases werden dabei dessen Temperatur, Druck, Massenstrom und Stickoxidkonzentration verwendet.

Da sich eine solche Lösung auf die Erfassung und gemeinsame Auswertung von Abgasparametern und Parametern des Katalysators bezieht und die Bestimmung der in das Abgas einzubringenden Reduktionsmittelrate unter anderem auch von der spezifischen Speicherkapazität des Katalysators für das Reduktionsmittel abhängt, ist die beschriebene Lehre nicht auf Systeme übertragbar, die bei nur geringem Speichervermögen des Katalysators dynamischen Änderungen des Brennkraftmaschinenbetriebes unterliegen.

In DE 43 10 961 A1 wird ein Verfahren zur Ermittlung der Katalysatoraktivität durch Einsatz mindestens eines Temperatursensors im Katalysator beschrieben.

Allen bekannten Verfahren ist gemeinsam, daß sie keine exakte Zudosierung von Reduktionsmittel ins Abgas unter dynamischen bzw. hochdynamischen Betriebsbedingungen der Brennkraftmaschine ermöglichen, die dynamischen bzw. hochdynamischen Änderungen blieben bisher weitgehend unberücksichtigt. Vor allem die genaue Ermittlung der Katalysatoraktivität bei diesen dynamischen Lastwechseln der Brennkraftmaschine ist ein bislang nicht gelöstes Problem gewesen.

Außerdem fanden nicht alle, sondern nur einige, relevante Zustandsgrößen bei den bekannten Reduktionsmittel- Dosierverfahren Berücksichtigung. Bei dem aus der DE 43 10 961 A1 bekannten Verfahren wird zwar für die Ermittlung einer Zustandsgröße des Katalysators, nämlich der Temperatur, vorgeschlagen, mehrere Temperatursensoren in den Katalysator einzubauen. Dies erscheint jedoch wenig praktikabel und außerdem sehr kostenintensiv.

Eine exakte Ermittlung des Reduktionsmittelfüllgrades im SCR-Katalysator, wie sie notwendig ist, um Reduktionsmitteldosierungen nach den Vorschlägen der EP 0 697 062 B 1 und EP 0 515 857 A1 darstellen zu können, ist aufgrund der komplexen Zusammenhänge solcher Katalysatorsysteme bis dato nicht möglich gewesen. Aus diesem Grund wird die Dosierung zeitweise unterbrochen und der Katalysator auf diese Weise leergefahren, um wieder definierte Verhältnisse zu bekommen. Der Nachteil besteht jedoch darin, daß der $NO_x$- Umsatz notgedrungen sinkt.

Die oben genannten Dokumente gehen also in ihrer Dosierstrategie von einer deutlichen Speicherfähigkeit des Katalysators in Bezug auf Reduktionsmittel und Wärme aus.

Diese Vorgehensweise ist prinzipiell für Vollkatalysatoren, wie sie aus der Kraftwerkstechnik bekannt sind, denkbar. Diese bestehen vollständig aus aktivem Material, das es ihnen ermöglicht, besonders bei niedrigen Temperaturen Reduktionsmittel einzuspeichern. Dank dieser Speicherfähigkeit können Reduktionsmitteldurchbrüche bei dynamischen, bzw. hochdynamischen Lastwechseln dadurch weitgehend vermieden werden, daß überschüssiges Reduktionsmittel, speziell $NH_3$, vom Katalysator kurzzeitig eingespeichert wird.

Für den Einsatz solcher Systeme unter räumlich stark eingeschränkten Bedingungen, wie z.B. im Fahrzeug, bei dem eine deutliche Reduktion von Abmessungen und Gewicht der zur Zeit verfügbaren Systeme notwendig wird, sind Vollkatalysatoren weniger gut geeignet, da sie kein ausreichendes Entwicklungspotential in Bezug auf oben genannte Anforderungen besitzen.

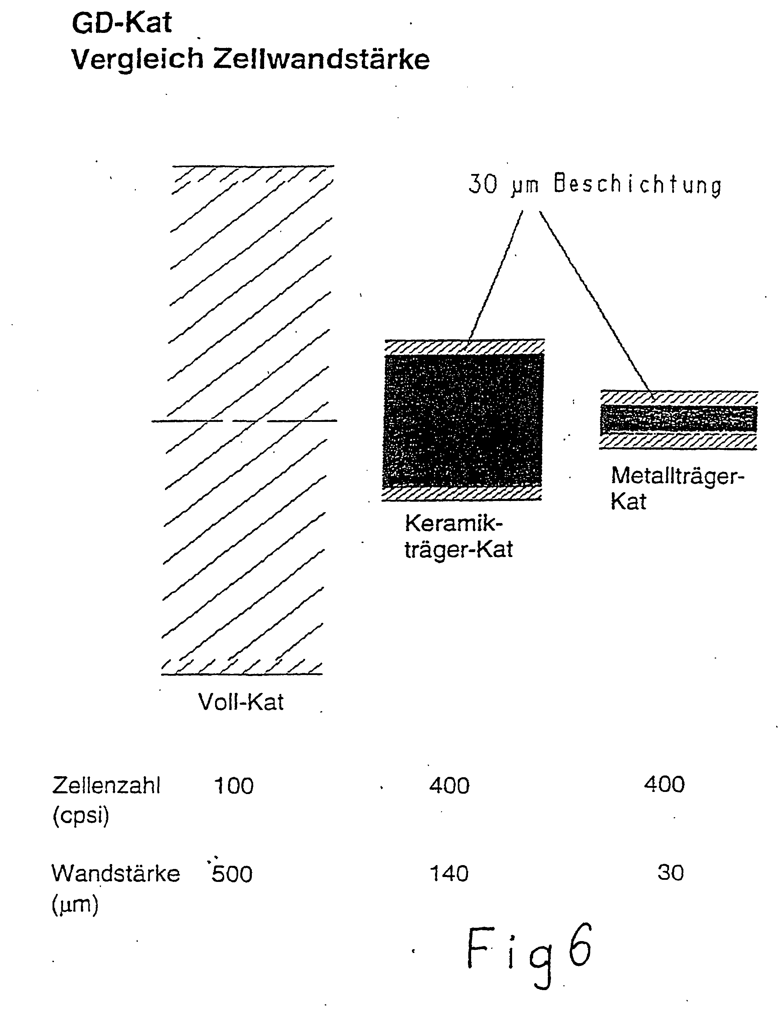

Aus diesem Grund werden Beschichtungskatalysatoren verwendet, deren Zellenzahl bedeutend höher gesetzt werden kann, und die durch ihre wesentlich geringere Wandstärke des Trägers eine größere freie Anströmfläche und dadurch einen geringeren Druckverlust aufweisen, siehe Fig. 6.

Ein solches Katalysatorsystem hat jedoch eine geringe Speicherfähigkeit für $NH_3$, da wesentlich weniger aktives Material zur Verfügung steht. Reduktionsmittelspitzen können somit nicht durch Absorption abgefangen werden, es kommt leichter zu unerwünschten Emissionen von Reduktionsmittelprodukten.

Daraus folgen höhere Anforderungen an die Genauigkeit der Dosierung und der Erfassung der Einflußparameter, wie Katalysatortemperatur, $NO_x$- Konzentration, Abgasmenge, Katalysatoraktivität usw., als dies für Vollkatalysatoren bisher angewendet wird.

Es ist daher Aufgabe der Erfindung, für ein Verfahren der gattungsgemäßen Art eine Strategie anzugeben, die dynamischen Änderungen des Brennkraftmaschinenbetriebes im Sinne einer optimierten Reduktionsmittelratenanpassung gerecht wird.

Diese Aufgabe wird zum einen erfindungsgemäß entsprechend dem Kennzeichen des Anspruches 1 durch die dort angegebenen Verfahrensmerkmale gelöst.

Das erfindungsgemäße Verfahren basiert darauf, daß zunächst anhand einer Referenz-Brennkraftmaschine, die der im Anwendungsfall benutzten Brennkraftmaschine entspricht, z.B. an einem dynamischen Maschinenprüfstand die maschinenspezifischen Werte für die $NO_x$- Konzentration im Abgas und die ausgestoßene Abgasmenge erfaßt und in einen Kennfeld- oder Datenspeicher eines die Dosiereinrichtung steuernden Rechners eingeschrieben werden. Diese Daten / Werte werden während des Maschinenbetriebes wenigstens noch durch die Werte der aktuell sensierten Temperatur des Abgases ergänzt und dann gemeinsam als Regelparameter für die Reduktionsmittel-Dosierung herangezogen. Dabei wird aus diesen wenigstens drei Parametern, gegebenenfalls noch unter Berücksichtigung der Konzentration des Reduktionsmittels, eine bestimmte Reduktionsmittelrate errechnet. Diese solchermaßen errechnete Reduktionsmittelrate für stationäre Verhältnisse wird in Abhängigkeit von erfaßten Lastzustandsänderungen der Brennkraftmaschine einer dynamischen oder hochdynamischen Korrektur unterzogen, so daß dem Abgasstrom entsprechend schnell eine geänderte und solchermaßen angepaßte Reduktionsmittelrate zudosierbar ist, daß die geänderte Abgasmenge mit ihren abweichenden Abgaswerten trotzdem durch den Katalysator optimal umsetzbar ist, ohne daß ein Reduktionsmittelschlupf auftritt oder unerwünschte Zwischen- oder Spaltprodukte emittiert werden.

Zum anderen kann diese Aufgabe durch die kennzeichnenden Merkmale des Anspruches 2 gelöst werden.

So wird beispielsweise während des Betriebes der Brennkraftmaschine die $NO_x$-Konzentration aus Daten ermittelt, die durch einen im Abgasstrom vor dem Katalysator angeordneten Sensor erfaßt werden. Die Abgasmenge der Brennkraftmaschine wird aus deren maschinenspezifischen Werten errechnet. Während des Betriebes der Brennkraftmaschine kann bei solchen Lastzustandsänderungen, die nur eine dynamische, aber keine hochdynamische Korrektur der ins Abgas einzudosierenden Reduktionsmittelmenge erfordern, zusätzlich zur sensorisch erfaßten Temperatur des Abgases auch die für eine bestimmte, gegebenenfalls variabel vorgebbare Dauer vor dem Meßzeitpunkt vorherrschende Abgastemperatur am Katalysatoreintritt berücksichtigt werden. Dieser Memoryabruf läßt eine verfeinerte Regelstrategie mit einer gewissen Vorausschau auf künftige Maschinenbetriebsweisen und die hieraus resultierenden Anforderungen an das Katalysatorsystem zu.

Vorteilhafte Details bzw. einzelne Schritte des Verfahrens sind in den Unteransprüchen 3 bis 11 gekennzeichnet.

Außerdem ist es zweckmäßig, die $NO_x$-Konzentration im Abgas auch stromab des Katalysators zu kontrollieren und die erfaßten / ermittelten Kontrollwerte für eine Einflußnahme auf die Regelung der ins Abgas einzudosierenden Reduktionsmittelmenge heranzuziehen.

Zweckmäßig ist es auch, zwischen errechneter und in das Abgas tatsächlich eindosierter Reduktionsmittelmenge einen Soll-Istwert-Vergleich durchzuführen, wobei der Istwert der Reduktionsmittelzufuhrmenge mittels eines an geeigneter Stelle angeordneten Sensors oder Meßorganes festgestellt wird.

Bei hochdynamischen Lastzustandsänderungen der Brennkraftmaschine während deren Betrieb, die eine hochdynamische Korrektur der ins Abgas einzudosierenden Reduktionsmittelrate erfordern, wird als Regelkriterium auch die Geschwindigkeit der Lastzustandsänderungen der Brennkraftmaschine erfaßt bzw. ermittelt und berücksichtigt. Auf diese Weise ist eine gut angepaßte Reaktion auf Laständerungen möglich.

Zweckmäßig ist es auch, als Indikator dafür, ob während des Brennkraftmaschinenbetriebes die tatsächliche aktuelle Abgasmenge mit den gespeicherten Abgasmengen - Referenzwerten übereinstimmt, die aktuelle Temperatur der Ansaugluft mittels eines Sensors zu erfassen und mit vorgegebenen Referenzwerten zu vergleichen. Falls dieser Soll-Istwert-Vergleich es erforderlich macht, wird dieses regelungstechnisch für eine Korrektur der ins Abgas einzudosierenden Reduktionsmittelmenge berücksichtigt. Auf diese Weise kann sehr stark unterschiedlichen klimatischen Verhältnissen, in denen die Brennkraftmaschine zum Einsatz kommen kann, und den dadurch bedingten Einflüssen auf die Abgasmenge und -zusammensetzung, Rechnung getragen werden.

Gerade unter solchen stark temperaturunterschiedlichen Einsatzbedingungen kann es sich auch als zweckmäßig erweisen, die Qualität des bevorrateten Reduktionsmittels, insbesondere wenn dieses flüssig ist, zu kontrollieren. Dies geschieht beispielsweise durch sensormäßige Erfassung der Temperatur des bevorrateten Reduktionsmittels und einen Rückschluß hieraus auf dessen Dichte, wobei die Istwerte mit vorgegebenen Referenzwerten verglichen werden. Abhängig vom Ergebnis dieses Soll-Istwert-Vergleiches kann dann eine Korrektur der ins Abgas einzudosierenden Reduktionsmittelmenge vorgenommen werden.

Gleichermaßen ist es zweckmäßig, von vornherein die Alterung des verwendeten Katalysators und eine damit einhergehende Aktivitätsminderung zu berücksichtigen. Dabei wird die Betriebszeit des Katalysators aus der Betriebszeit der Brennkraftmaschine abgeleitet. Je nach Fortschritt der Betriebsdauer oder nach bestimmten Betriebsdauerintervallen kann dann die Alterung des Katalysators durch entsprechende Änderung der ins Abgas einzudosierenden Reduktionsmittelmenge berücksichtigt werden.

Außerdem wird die ermittelte Reduktionsaktivität eines Referenz-Katalysators bei unterschiedlicher Reduktionsmittelkonzentration zur Optimierung der Reduktionsmitteldosierung herangezogen.

Das erfindungsgemäße Verfahren eignet sich besonders in Verbindung mit hochdynamisch betriebenen Brennkraftmaschinen, die z.B. in stationären Anlagen oder Fahrzeugen, Kraftfahrzeugen, Nutzfahrzeugen, insbesondere Lastkraftwagen jeglicher Bauund Einsatzart und Omnibussen, als Antriebsquelle eingebaut sind.

Grundsätzlich liegen der Erfindung folgende Überlegungen bzw. Theorien zugrunde.

Die in das Abgas einer Brennkraftmaschine einzudosierende Reduktionsmittelmenge hängt zum einen von der Menge der Abgasemission ab und zum anderen vom Vermögen - der Aktivität - des Katalysators, diese abzubauen.

Die Aktivität bzw. das Reduktionsvermögen eines Katalysators läßt sich durch verschiedene Geschwindigkeitsansätze beschreiben.

Als einfachstes Beispiel eines solchen Ansatzes sei folgender formalkinetischer Ansatz genannt: Liegt die fiktive Reaktion $E \rightarrow P$ vor, wobei E ein zu reduzierender Abgasbestandteil, z.B. $NO_x$, und P das Reduktionsprodukt, z.B. $N_2$, ist, so kann man die Änderung der Konzentration dc des Ausgangsstoffes E über der Zeit ( unter der Annahme konstanten Volumens ) folgendermaßen beschreiben:

$$(1) \qquad R_E = \frac{dc}{dt} = k \cdot c^m$$

$R_E$ wird als Stoffmengenänderungsgeschwindigkeit von E bezeichnet (mol/s),
m ist die Ordnung der Reaktion [-].

Die Geschwindigkeitskonstante k ist ein Maß dafür, wie schnell eine Reaktion abläuft und hängt von der Temperatur folgendermaßen ab:

$$(2) \qquad k = k_o \cdot e^{-\frac{E}{R \cdot T}}$$

wobei

    E = Aktivierungsenergie [J/mol]
    R = Allgemeine Gaskonstante = 8,314 J/(mol*K)
    T = Temperatur [K]
    $k_o$ = Stoßfaktor

bedeuten.

Nach Integration von (1) erhält man bei Annahme von m = 1 ( Reaktion erster Ordnung) :

$$(3) \qquad c = c_o \cdot e^{-kt}$$

wobei

    c = Endkonzentration [mol/m$^3$]
    $c_o$ = Anfangskonzentration [mol/m$^3$]
    t = Reaktionszeit [s]

bedeuten.

Die Reaktionszeit ist gleich der Verweilzeit $\tau$ im Reaktor:

$$(4) \qquad \tau = \frac{V_{Kat}}{\dot{V}}$$

wobei

    $\dot{V}$ = Volumenstrom [m$^3$/s]
    $V_{Kat}$ = Katalysatorvolumen [m$^3$]

bedeuten.

Aus diesen Gleichungen ist ersichtlich, daß die Endkonzentration c in diesem Fall zwar linear von der Eingangskonzentration $c_o$ abhängt, jedoch nicht linear von der Verweilzeit und somit auch nicht vom Volumenstrom. Im dynamischen Betrieb genügt es also keinesfalls, nur einen $NO_x$- Massen- oder $NO_x$- Volumenstrom anzugeben, wie dies in EP 0 697 062 B 1 vorgeschlagen wird, da es dadurch nicht möglich ist eine eindeutige Zuordnung zu einem Betriebspunkt des Katalysatorsystems vorzunehmen. So kann ein hoher $NO_x$- Massenstrom zum einen aus einer hohen $NO_x$- Konzentration und einem niedrigen Abgasmassenstrom resultieren, oder aus einer niedrigen $NO_x$-Konzentration, aber einem hohen Abgasmassenstrom. Dies führt zu unterschiedlicher $NO_x$-Konvertierung.

Die Reaktionstemperatur hat über die Geschwindigkeitskonstante k einen wesentlichen Einfluß auf die Stoffmengenänderungsgeschwindigkeit.

Zusätzlich kann noch die Abhängigkeit von der Reduktionsmittelkonzentration berücksichtigt werden, vgl. Gleichung 5 und 6.

Formalkinetischer Ansatz:

$$(5) \qquad R_{NO} = k \cdot c_{NO}^m \cdot c_{NH_3}^n$$

Mechanistischer Ansatz:

$$(6) \qquad R_{NO} = \frac{k \cdot K \cdot c_{NO}^{m} \cdot c_{NH_3}}{1 + K \cdot c_{NH_3}}$$

wobei

K = Sorptionsgleichgewichtskonstante von $NH_3$ [$m^3$/mol]

bedeutet.

Will man möglichst exakte Voraussagen über die Aktivität des Katalysators treffen, so ist es folglich sinnvoll, die jeweiligen Einflüsse getrennt voneinander zu betrachten und nicht die $NO_x$- Konzentration und die anfallende Abgasmenge zu einem $NO_x$-Strom zu kombinieren.

Die Ermittlung eines globalen Geschwindigkeitsansatzes, um mit diesem eine Reduktionsmittel-Dosierung zu realisieren, erscheint unter realen Bedingungen weder möglich noch wünschenswert, da sie zum einen das Redaktionsvermögen über den gesamten Arbeitsbereich des Katalysators nicht genau genug wiedergeben und zum anderen die Zusammenhänge nicht sofort deutlich werden. Die Feinjustage der Reduktionsmittel-Dosierung würde sich so äußerst schwierig gestalten.

Aus diesem Grund wird erfindungsgemäß zur Ermittlung der $NO_x$-Reduktionsfähigkeit auf ein Kennfeld einer Referenz-Brennkraftmaschine zugegriffen, das einen globalen Stoffmengenänderungsgeschwindigkeitsansatz durch die Zuordnung einzelner Stoffmengenänderungsgeschwindigkeiten zu bestimmten Betriebspunkten des Katalysatorsystems ersetzt.

Das Kennfeld, bzw. die Kennfelder, enthalten die Haupteinflussfaktoren $NO_x$- Konzentration c, die fiktive Arbeitstemperatur $T_A$, den Abgasvolumenstrom $\dot{V}$ Abgas und gegebenenfalls die Reduktionsmittelkonzentration. Durch $\dot{V}_{Abgas}$ finden sowohl die Verweilzeit $\tau$, als auch die Gasgeschwindigkeit, die den Einfluß der Filmdiffusion mitbestimmt, Berücksichtigung.

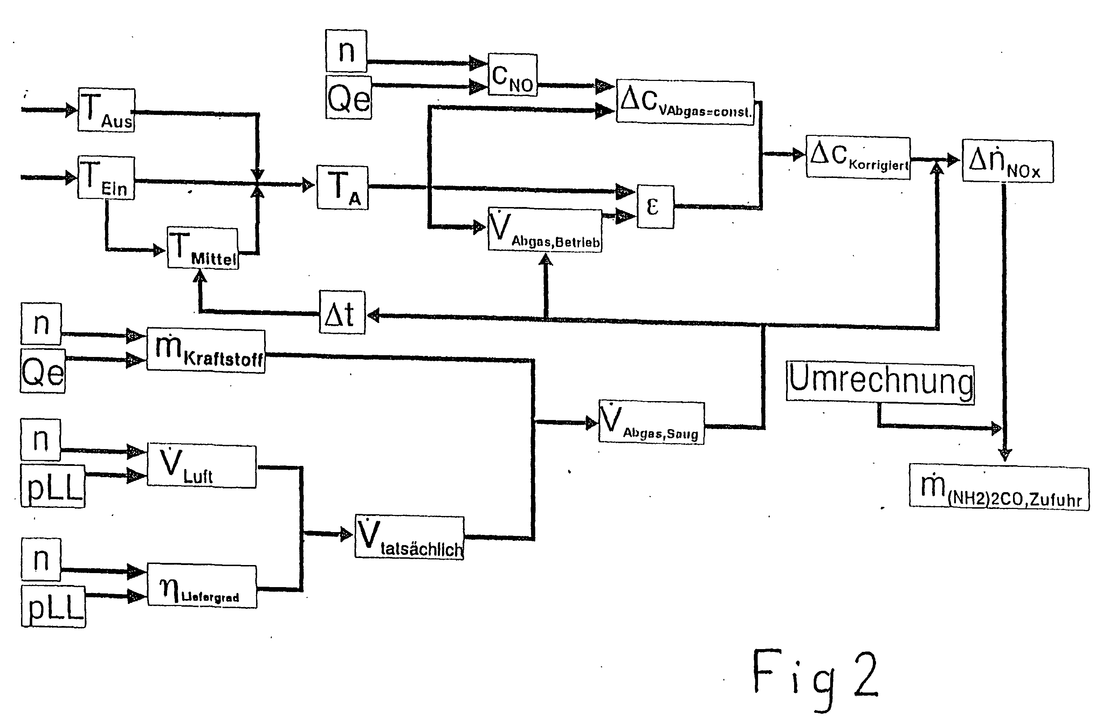

Da ein einziges Kennfeld, das die oben genannten Faktoren berücksichtigt, mindestens dreidimensional sein müßte, ist es zweckmäßig, mindestens zwei Kennfelder der Referenz-Brennkraftmaschine getrennt voneinander aufzunehmen, aus deren späterer Kombination das $NO_x$-Reduktionsverhalten des Katalysators berechnet werden kann, vgl. Fig. 2.

So läßt sich z. B. im ersten Kennfeld ($\Delta cV_{Abgas=const}$- Kennfeld, enthält die Information über die Stoffmengenänderungsgeschwindigkeit) die Endkonzentration bei konstantem $\dot{V}_{Abgas}$ [$m^3$/h], variabler $NO_x$- Eingangskonzentration $c_o$ [ppm] und $T_A$ [°C] ablegen. $T_A$ ist hierbei eine fiktive Arbeitstemperatur. $c_o$ kann vorerst aus einem maschinenspezifischen Kennfeld, das über die Drehzahl n sowie einem lastabhängigen Signal (z.B. der Einspritzmenge Qe) aufgetragen ist, ausgelesen oder, direkt über einen $NO_x$-Sensor während des Brennkraftmaschinen-Betriebes ermittelt werden.

Das zweite Kennfeld ($\varepsilon$- Kennfeld), das über die fiktive Arbeitstemperatur $T_A$ und $\dot{V}$ Abgas [$m^3$/h] aufgetragen ist, dient zum einen dazu, den Verweilzeiteinfluß in die Berechnung einfließen zu lassen, zum anderen aber auch um Ungleichförmigkeiten bei der Anströmung, Filmdiffussionseinflüsse, Rückströmungen usw. auszugleichen. Dieses Kennfeld enthält den Korrekturfaktor $\varepsilon$ [-].

Aus dem ersten Kennfeld wird nun $\Delta c_{VAbgas=const} = c_o - c$ berechnet und mit $\varepsilon$ multipliziert. Daraus ergibt sich, falls hochdynamische Einflüsse und Beeinflussungen durch die Reduktionsmittelkonzentration unberücksichtigt bleiben, die tatsächlich reduzierbare Konzentrationsdifferenz $\Delta c_{korrigiert}$ [ppm]. Nach Multiplikation mit $\dot{V}_{Abgas}$ erhält man den reduzierbaren $NO_x$- Mengenstrom $\Delta\dot{n}_{NOx}$ [mol/h]. Durch anschließende Umrechnung ergibt sich die benötigte Reduktionsmittelrate, für den üblicherweise verwendeten Harnstoff hier als $\dot{m}_{(NH2)2CO}$,Zufuhr [g/h] bezeichnet.

Ermittlung der Einflußgröße Temperatur

Da, wie vorstehend ersichtlich, die Reaktionstemperatur T großen Einfluß auf die Geschwindigkeit der Reaktion und damit die Konvertierung hat, ist es unausweichlich, eine Möglichkeit zu finden, die Temperatur möglichst genau zu bestimmen. Dies ist insofern problematisch, als sich die Abgastemperatur im dynamischen Betrieb ständig ändert. Die Verwendung von Temperatursensoren vor und nach dem Katalysator kann den katalysatorinternen Temperaturverlauf nicht richtig widerspiegeln, das Anbringen mehrerer Temperatursensoren im Katalysator ist problematisch und teuer.

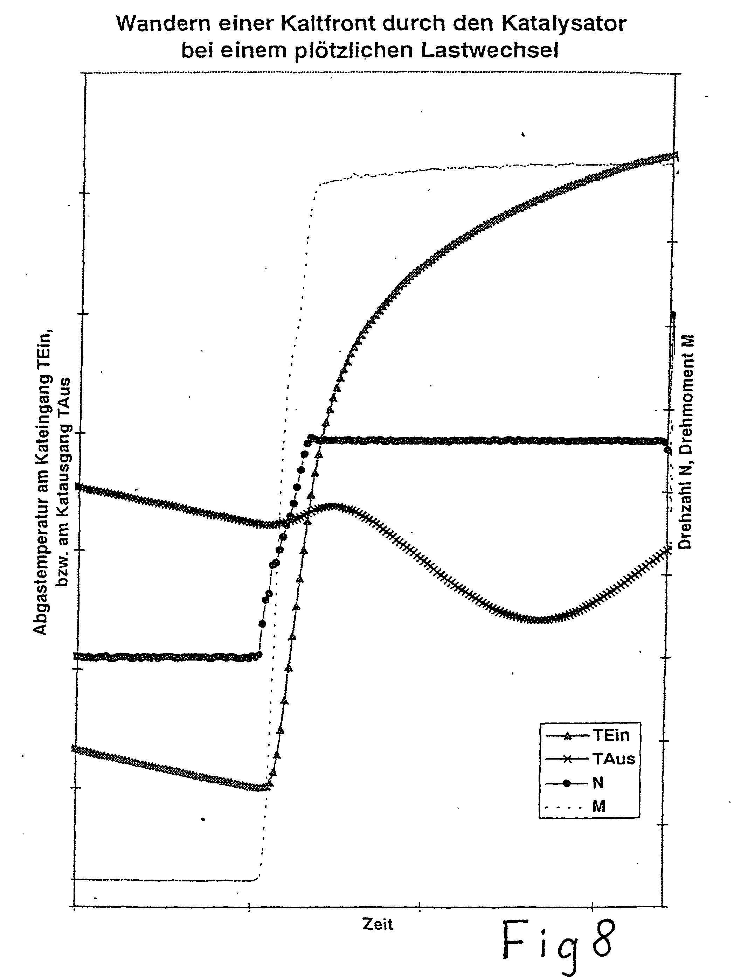

Wird die Brennkraftmaschine z.B. nach relativ hoher Last mit niedriger Last betrieben, so schiebt sich eine Kaltfront durch den Katalysator. Der hintere Temperaturfühler zeigt noch heiß an, während der vordere die kältere Temperatur am Katalysatoreintritt detektiert. Erfolgt nun ein Lastsprung zu höherer Last, so meldet der Fühler am Eintritt schon heiß, während der Sensor am Ende noch heiß angibt, die Temperatur im Katalysator ist jedoch wesentlich niedriger, vgl. Fig. 8. Wegen der zu hoch angenommenen Temperatur wird in einem solchen Moment zu viel Reduktionsmittel in das Abgas eindosiert, das nicht mehr umgesetzt werden kann. Es tritt Reduktionsmittelschlupf auf. Eine Lösung hierfür stellt die Berücksichtigung der Vorgeschichte der Katalysatortemperatur in der Dosierstrategie dar, siehe Anspruch 3. Hierzu wird ein schleifender Mittelwert $T_{Mittel}$ über die Katalysatoreingangstemperatur gebildet, der Temperaturspitzen abfangen soll. Mit anderen katalysatorrelevanten Temperaturen, z.B. jene am Katalysatorein- und -austritt, bildet er die fiktive Arbeitstemperatur $T_A$, mit der dann die Daten aus den Kennfeldern ausgelesen werden.

$$(7) \qquad T_A = y, T_{Mittel} + \Sigma(x_i, T_i)$$

wobei

$T_i$ = katalysatorrelevante Temperaturen (z.B. Temperaturen am Kateintritt $T_{Ein}$ und am Kataustritt $T_{Aus}$)

$T_{Mittel}$ = Schleifender Mittelwert der Temperatur;

$$T_{Mittel} = f(T_{Ein}, \dot{V}_{Abgas})$$

$$Sx_i + y = 1$$

bedeuten.

Durch die Faktoren xi und y wird eine Wichtung der einzelnen Temperaturen vorgenommen.

Bei einem größeren Abgasvolumenstrom erwärmt bzw. kühlt sich der Katalysator schneller ab, als bei einem kleineren. Aus diesem Grund wird die Länge des Zeitintervalls $\Delta t$, über das gemittelt wird, über eine Kennlinie von $\dot{V}_{Abgas}$ variiert, um so das Ansprechverhalten von $T_{Mittel}$ dem jeweiligen Betriebszustand besser anpassen zu können.

Für die Berechnung der Temperatur $T_{Mittel}$ muß somit eine bestimmte Anzahl Zeitschritte reserviert werden.

Für die Aufnahmefrequenz f ergibt sich

$$f = n/\Delta t$$

wobei

n= Anzahl der Zeitschritte [-]

$\Delta t$ = Gesamtaufnahmelänge des Mittelwertes [s]

bedeuten.

Es ist auch möglich, eine feste Frequenz vorzugeben und dafür die Anzahl der einzelnen Zeitschritte zu variieren.

Ermittlung der Einflußgröße Abgasmenge (z.B. Abgasvolumenstrom)

Der theoretische Luftvolumenstrom wird z.B. aus dem Hubraum des Verbrennungsmotors, der Drehzahl n und dem Saugrohrdruck pLL bestimmt, über den maschinenspezifischen Liefergrad korrigiert und mit der Kraftstoffmasse, die sich aus der Drehzahl n und Qe ergibt, zum Abgasvolumenstrom zu Saugbedingungen verknüpft.

Für die Auftragung im $\varepsilon$- Kennfeld kann $\dot{V}_{Abgas,Saug}$ noch auf die Betriebstemperatur, ermittelt aus $T_{Ein}$ korrigiert werden.

Ermittlung der Einflußgröße $NO_x$- Konzentration

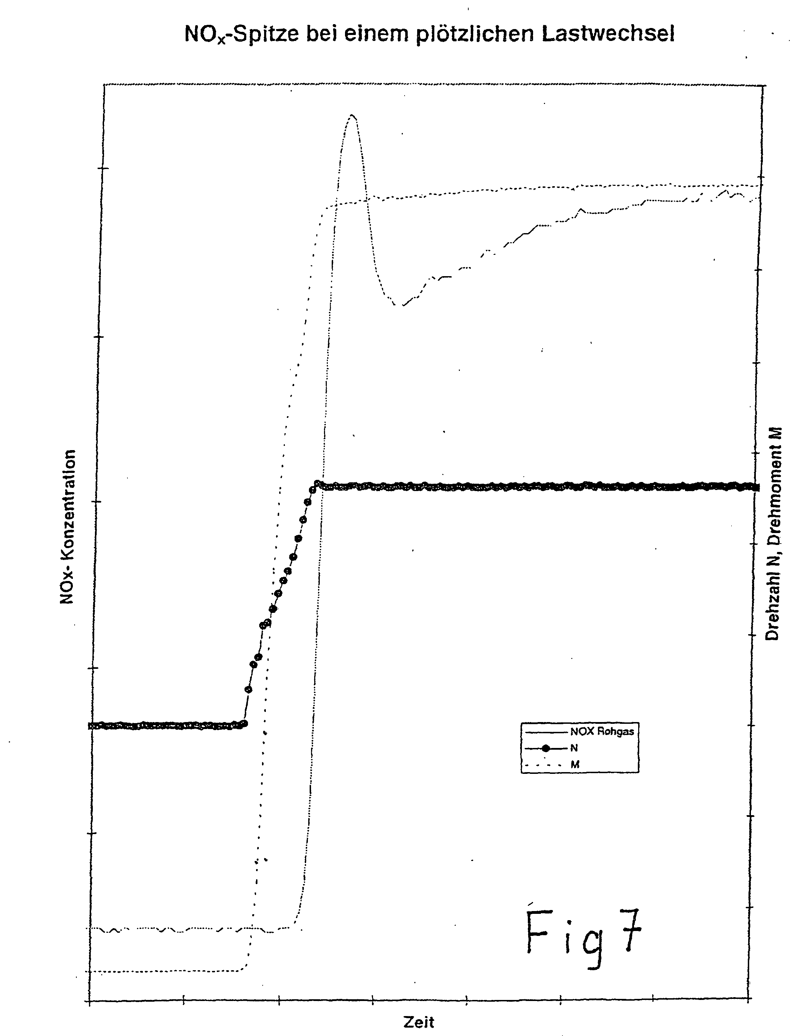

Die Eingangskonzentration an $NO_x$ kann entweder nach Anspruch 1 aus maschinenspezifischen Daten z.B. mittels Kennfeldern oder, nach Anspruch 2 durch $NO_x$- Sensoren ermittelt werden.
Im hochdynamischen Betrieb der Brennkraftmaschine treten kurzzeitig $NO_x$-Konzentrationsspitzen bzw. -senken auf, die deutlich von den im stationären Maschinenbetrieb ermittelten Konzentrationen abweichen, vgl. Fig. 7. Durch eine Kennlinie über die Laständerungsgeschwindigkeit wird dieses Verhalten im hochdynamischen Betrieb mitberücksichtigt, siehe Anspruch 6.

Nachfolgend noch einige zusammenfassende Anmerkungen:

-   Der Vorteil gegenüber bekannten Auslegungen liegt zum einen darin, daß nur ein durchgehender Strang zur Steuerung verwendet wird. Das verspricht ein einfacheres Handling in der'Applikation, da Reaktionen auf Änderungen sicher einzelnen Kennfeldern bzw. Berechnungsfaktoren zugewiesen werden können. Außerdem wird durch die Verwendung der Einflußfaktoren Temperatur, Eingangskonzentration, Volumenstrom sowie gegebenenfalls der Reduktionsmittelkonzentration und deren Aufteilung in mindestens zwei Kennfelder eine größtmögliche Transparenz erreicht.

-   Durch die Verwendung der $NO_x$-Konzentrationen können $NO_x$- Sensoren leicht in die Dosierstrategie eingebaut werden (Ersetzen des Kennfeldes $c_{NO}$ durch die Sensordaten). Außerdem ist es möglich durch Anbringen eines $NO_x$- Sensors hinter dem Kat eine Regelung zu realisieren, siehe Anspruch 4.

-   Bei plötzlichen Lastwechseln treten $NO_x$-Konzentrationsspitzen bzw. -senken auf, die stationär nicht ermittelt werden können. Für solch hochdynamische Zustandsänderungen kann eine zusätzliche Korrektur vorgesehen werden, die über die Laständerungsgeschwindigkeit Einfluß auf die Dosiersteuerung nimmt, sprich $C_{NO}$ nach oben oder unten korrigiert, siehe Anspruch 6.

-   Es findet eine dynamische Korrektur über die fiktive Arbeitstemperatur $T_A$ statt

-   Bei der Berechnung von $\dot{V}_{Abgas}$ sowie bei der Umrechnung der Konzentration von [ppm] in [mol/m$^3$] wird eine Lufttemperatur zu Saugbedingungen geschätzt. Hier kann eine Temperaturmeßstelle eine Erhöhung der Genauigkeit bringen, siehe Anspruch 7.

-   Man kann eine Dichtekorrektur für die Harnstoff- Wasser-Lösung vorsehen, um einen Dosierfehler aufgrund von Dichteunterschieden zu minimieren, siehe Anspruch 8.

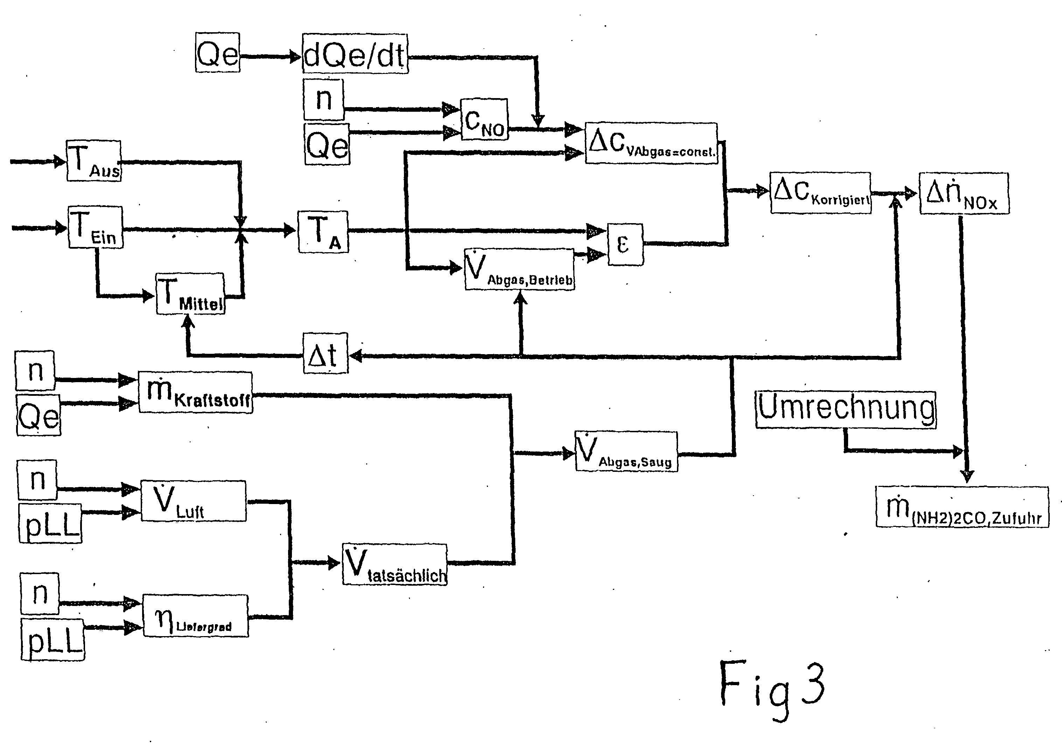

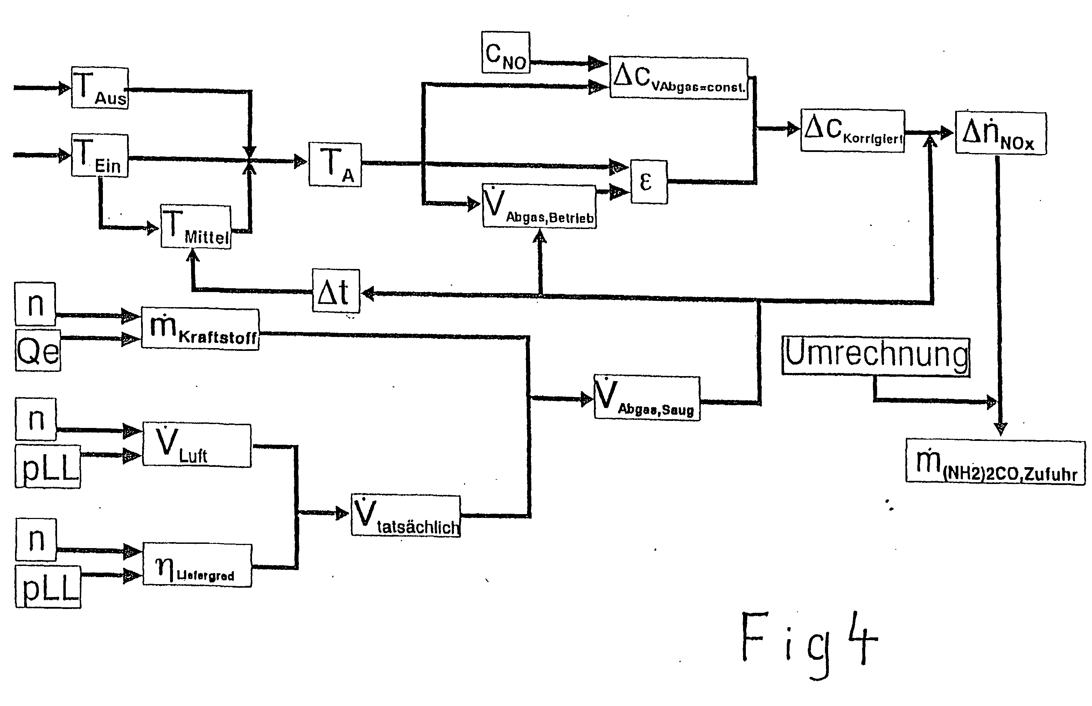

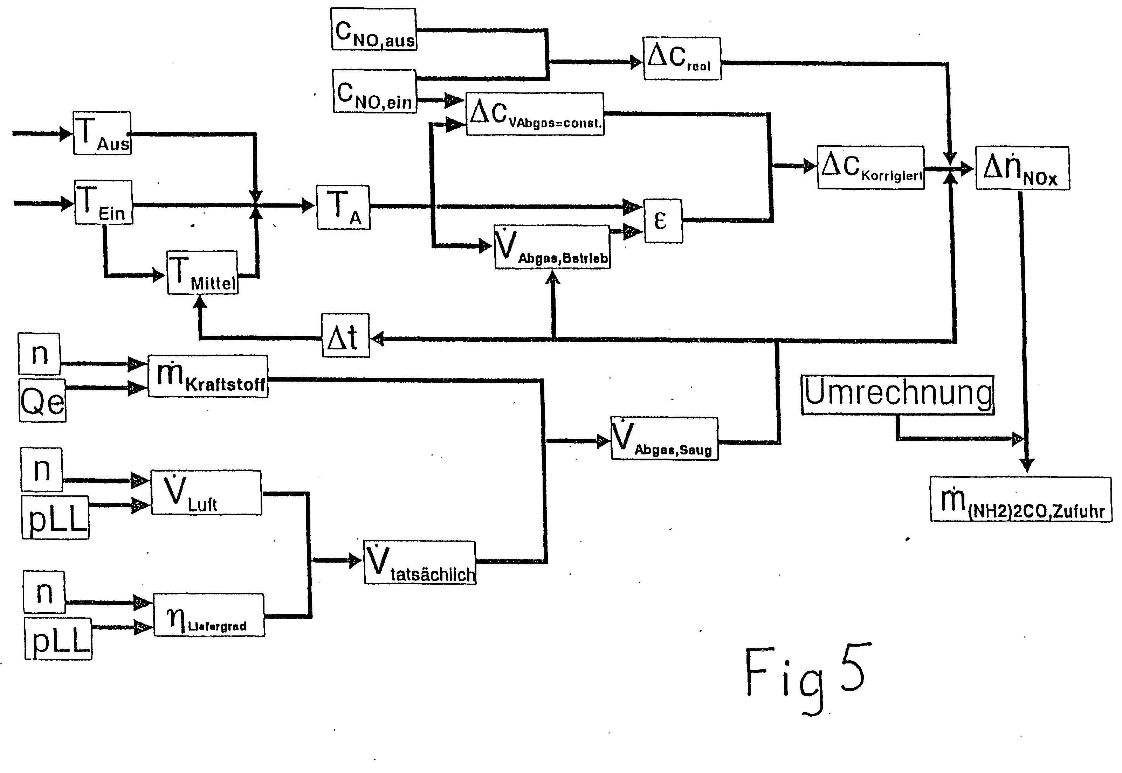

In den Figuren 2 bis 5 sind vier verschiedene Schemata jeweils einer Dosierstrategie, wie sie vorstehend beschrieben ist, nach Art eines Flußdiagrammes aufgezeigt.

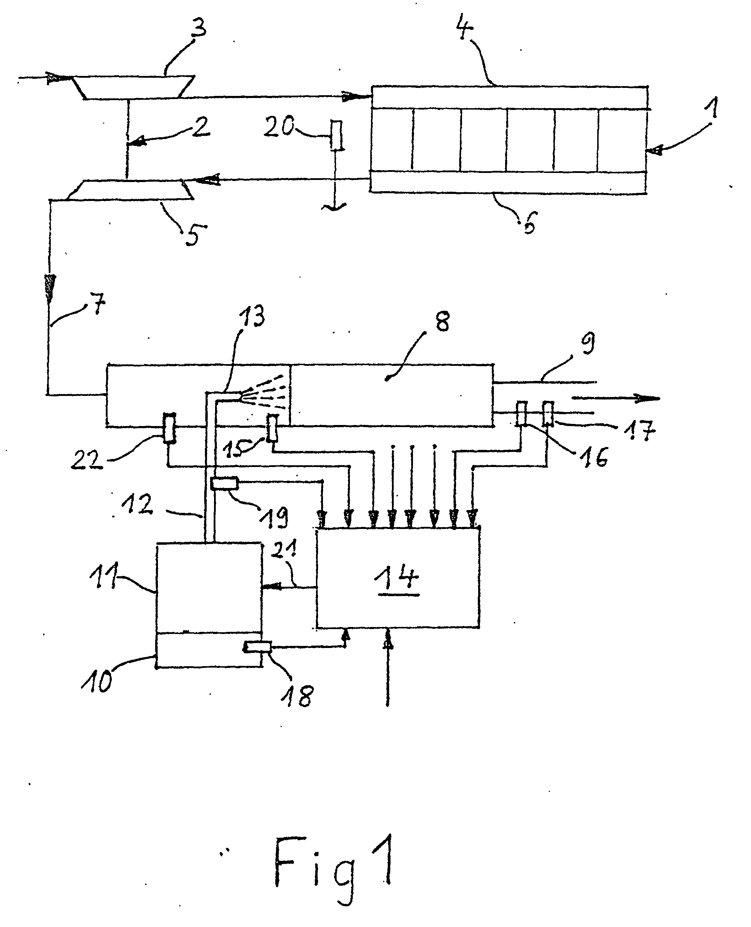

Dabei zeigt Fig. 1 schematisch eine Brennkraftmaschine, und eine Abgasnachbehandlungseinrichtung auf, mit der beispielhaft das erfindungsgemäße Dosierverfahren erläutert wird.

Fig. 2 zeigt eine Dosierstrategie einer Harnstoffdosierung mit einer dynamischen Korrektur über die fiktive Arbeitstemperatur.

Fig. 3 zeigt eine Dosierstrategie einer Reduktionsmitteldosierung mit hochdynamischer Korrektur der Reduktionsmittelmenge auf.

Fig. 4 zeigt eine Dosierstrategie einer Reduktionsmitteldosierung mit $NO_x$ - Sensor auf.

Fig. 5 zeigt eine Dosierstrategie einer Reduktionsmitteldosierung mit Regelung durch mehrere $NO_x$-Sensoren auf.

Fig. 6 zeigt den Vergleich VollKatalysator - BeschichtungsKatalysator, ausgedrückt durch die unterschiedlichen Wandstärken.

Fig. 7 zeigt das Auftreten einer NOx- Spitze bei einem plötzlichen Lastwechsel.

Fig. 8 zeigt das Wandern einer Kaltfront durch den Katalysator.

Dabei sind in Fig. 1 eine aufgeladene Brennkraftmaschine mit 1 und der zugehörige Abgasturbolader mit 2 bezeichnet. Durch den Verdichter 3 des Abgasturboladers 2 wird Ladeluft in eine Ladeluftleitung 4 der Brennkraftmaschine 1 gefördert. Die Turbine 5 des Abgasturboladers 2 wird aus einem Abgasstrang 6, an dem die einzelnen Zylinder der Brennkraftmaschine 1 angeschlossen sind, mit Abgas zu Antriebszwecken versorgt. Vom Ausgang der Abgasturbine 5 gelangt das Abgas über eine Abgasleitung 7 zu einem in diese eingebauten Katalysator 8 und strömt gereinigt von letzterem über eine Auslaßleitung 9 ab. Mit 10 ist ein Vorratsbehälter für flüssiges Reduktionsmittel, mit 11 ist eine Dosiereinrichtung, die dieses Reduktionsmittel über eine Zuleitung 12 und eine abgasleitungsinterne Düse 13 in den Abgasstrom vor dem Katalysator 8 eindosiert, und mit 14 ist eine Regel- und Steuereinrichtung bezeichnet, die die Dosiereinrichtung 11 steuert. Die Regel- und Steuereinrichtung 14 enthält als zentrale Regeleinheit einen Mikroprozessor, der über ein Datenbussystem mit einer Ein- und Ausgabeperipherie sowie Kennfeld - bzw. Datenspeichern und Programmspeichern verknüpft ist. Im Programmspeicher sind softwaremäßig die Regelphilosophie und die Regelalgorithmen für die Steuerung der Dosiereinrichtung im Sinne des erfindungsgemäßen Verfahrens abgelegt. In den Kennfeld - bzw. Datenspeichern sind die Referenzund Sollwerte abgelegt, nach denen die Steuerung der Dosiereinrichtung im Sinne des erfindungsgemäßen Verfahrens erfolgt. Mit 15 ist ein Temperatursensor bezeichnet, der die Abgastemperatur vor dem Eintritt in den Katalysator 8 erfaßt. Mit 16 ist ein Temperatursensor bezeichnet, der die Abgastemperatur am Katalysatoraustritt mißt. Mit 17 ist ein Sensor- bzw. Meßorgan bezeichnet, mit dem die $NO_x$- Konzentration im Abgas nach dem Katalysator oder ein dafür repräsentativer Bestandteil erfaßt wird. Mit 18 ist ein Temperatursensor bezeichnet, der die Temperatur des bevorrateten Reduktionsmittels erfaßt und so einen Rückschluß auf die aktuelle Dichte des Reduktionsmittels ermöglicht. Mit 19 ist ein Sensor bzw. eine Meßeinrichtung bezeichnet, der bzw. die die Durchfluß- bzw. Dosiermenge ( Istwert ) der in das Abgas eindosierten Reduktionsmittelmenge erfaßt Mit 20 ist ein die aktuelle Ansaugluft- bzw. Ladelufttemperatur erfassender Temperatursensor bezeichnet. Die Meßwerte der Sensoren 15, 16, 17, 18, 19, 20 und weiterer für den Maschinenbetrieb maßgeblicher, bzw. Rückschlüsse darauf zulassender Sensoren, werden der Regel- und Steuereinrichtung 14 über deren Eingangsperipherie zugeführt und dann intern ver- bzw. ausgewertet. Die errechneten Steuerbefehle werden über die Ausgangsperipherie und eine entsprechende Steuerleitung 21 an die Dosiereinrichtung 11 gegeben, die diese in eine entsprechend in das Abgas einzudosierende Reduktionsmittelrate umsetzt.

Nach Anspruch 2 wird die $NO_x$-Konzentration nicht mit Hilfe der Referenz-Brennkraftmaschine bestimmt, sondern mit einem vor dem Katalysator 8 und vor der Düse 13 angeordneten Sensor 22. Die Referenz-Brennkraftmaschine dient nur noch der Bestimmung der Abgasmenge.

Die einzelnen Schritte der Dosierstrategien hierzu sind aus den Schaubildern der Figuren 2 bis 5 nachvollziehbar.

In Fig. 6 ist ein Vergleich des für die $NO_x$-Reduzierung verwendeten Katalysators mit einem Voll-Katalysator dargestellt, wie er in Kraftwerken verwendet wird. Der Voll-Katalysator ist wegen seiner Wärmeträgheit für dynamsiche Vorgänge nicht anwendbar.

Fig. 7 zeigt das Auftreten einer $NO_x$-Spitze bei Lastwechsel.

In Fig. 8 ist das Wandern einer Kaltfront durch den Katalysator dargestellt.

**Patentansprüche**

1. Verfahren zur Dosierung eines Reduktionsmittels, insbesondere Harnstoff bzw. wässrige Harnstofflösung, in stickoxidhaltiges Abgas einer Brennkraftmaschine räumlich in die Abgasleitung vor einem Katalysatorsystem mit wenigstens NOx-Reduktionsaktivität, geringer Wärmekapazität und geringer Speicherfähigkeit für Reduktionsmittel, wobei die in Verbindung mit einer Referenz-Brennkraftmaschine ermittelten maschinenspezifischen Werte für die NOx-Konzentration und Abgasmenge oder die in Verbindung mit einer Referenz-Brennkraftmaschine ermittelten maschinenspezifischen Werte für die Abgasmenge und die aus Daten während des Betriebes der Brennkraftmaschine ermittelte, von einem im Abgasstrom vor dem Katalysator angeordneten Sensor erfasste NOx-Konzentration, sowie wenigstens noch die während des Brennkraftmaschinenbetriebes aktuell sensierte Temperatur des Abgases und gegebenenfalls noch die Reduktionsmittelkonzentration als Regelparameter für die Reduktionsmittel-Dosierung herangezogen werden und aus diesen Parametern eine Reduktionsmittelrate errechnet wird, **dadurch gekennzeichnet, dass** diese solchermaßen errechnete Reduktionsmittelrate in Abhängigkeit von erfassten Lastzustandsänderungen der Brennkraftmaschine einer dynamischen bzw. hochdynamischen Korrektur unterzogen und eine entsprechend angepasste Reduktionsmittelmenge dem Abgasstrom zugeführt wird, indem bei dynamischer Korrektur der Reduktionsmittelrate zusätzlich zur sensorisch erfassten Temperatur des Abgases auch die für einen bestimmten, ggf. variablen Zeitraum vor dem Messzeitpunkt vorherrschende Abgastemperatur am Katalysatoreintritt bzw. bei hochdynamischer Korrektur der Reduktionsmittelrate die Geschwindigkeit der Lastzustandsänderung der Brennkraftmaschine berücksichtigt wird.

2. Verfahren nach Anspruch 1, **dadurch gekennzeichnet, dass** zu Kontroll- und Regelzwecken eine Messung der $NO_x$-Konzentration im Abgas auch stromab des Katalysators erfolgt.

3. Verfahren nach Anspruch 1, **dadurch gekennzeichnet, dass** zwischen errechneter und dem Abgas zugeführter Reduktionsmittelmenge ein Soll-Ist-Vergleich durchgeführt wird, wobei der Istwert der Reduktionsmittelzufuhrmenge mittels eines an geeigneter Stelle angeordneten Sensors oder Messorgans festgestellt wird.

4. Verfahren nach Anspruch 1, **dadurch kennzeichnet, dass** als Indikator dafür, ob die tatsächliche aktuelle Abgasmenge mit den gespeicherten Referenzwerten der Abgasmenge übereinstimmt, die aktuelle Temperatur der Ansaugluft während des Brennkraftmaschinenbetriebes mittels eines Sensors erfasst und mit vorgegebenen Referenzwerten verglichen sowie -falls erforderlichregelungstechnisch für eine Korrektur der ins Abgas einzudosierenden Reduktionsmittelrate berücksichtigt wird.

5. Verfahren nach Anspruch 1, **dadurch gekennzeichnet, dass** die Dichte des bevorrateten flüssigen Reduktionsmittels sensormäßig erfasst, mit vorgegebenen Referenzwerten verglichen und abhängig vom Ergebnis dieses Soll-Istwert-Vergleiches eine etwaige notwendige Korrektur der ins Abgas einzudosierenden Reduktionsmittelmenge vorgenommen wird.

6. Verfahren nach Anspruch 1, **dadurch gekennzeichnet, dass** eine sich aus der Betriebsdauer der Brennkraftmaschine und des Katalysators ableitende Alterung und damit einhergehende Aktivitätsminderung des Katalysators regelungstechnisch durch eine entsprechende Änderung der ins Abgas einzudosierenden Reduktionsmittelrate berücksichtigt wird.

7. Verfahren nach Anspruch 1, **dadurch gekennzeichnet, dass** die ermittelte Reduktionsaktivität eines Referenz-Katalysators bei unterschiedlicher Reduktionsmittelkonzentration zur Optimierung der Reduktionsmitteldosierung herangezogen wird.

8. Verfahren nach einem der Ansprüche 1 bis 7, **gekennzeichnet durch** dessen Anwendung in Verbindung mit einer dynamisch oder hochdynamisch betriebenen Brennkraftmaschine, die in stationären Anlagen oder Fahrzeugen, Kraftfahrzeugen, Nutzfahrzeugen, insbesondere Lastkraftwagen jeglicher Bau- und Einsatzart und Omnibussen, als Antriebsquelle eingebaut ist.

**Claims**

1. A method for metering a reducing agent, more particularly urea or aqueous urea solution, into nitrogen oxide-containing exhaust gas of an internal combustion engine, spatially into the exhaust gas line upstream of a catalytic converter system having at least $NO_x$-reducing activity, low heat capacity and low storage capacity for reducing agent, wherein the engine-specific values for the $NO_x$-concentration and exhaust gas quantity, ascertained in connection with a reference internal combustion engine, or the engine-specific values for the exhaust gas quantity ascertained in connection with a reference internal combustion engine and the $NO_x$-concentration ascertained from data during the operation of the internal combustion engine and detected by a sensor arranged in the exhaust gas flow upstream of the catalytic converter, and at least in addition the temperature of the exhaust gas currently sensed during the internal combustion engine operation, and optionally in addition the reducing agent concentration, are used as regulation parameters for the reducing agent metering, and a reducing agent rate is calculated from these parameters, **characterised in that** this reducing agent rate calculated in such a way undergoes dynamic or high-dynamic correction depending on detected load state changes of the internal combustion engine, and an accordingly matched quantity of reducing agent is fed to the exhaust gas flow, by taking into consideration, in the case of dynamic correction of the reducing agent rate, as well as the temperature of the exhaust gas detected by sensor, also the exhaust gas temperature at the catalytic converter inlet prevailing for a specific, optionally variable, period of time before the moment of measurement or, in the case of high-dynamic correction of the reducing agent rate, the speed of the load state change of the internal combustion engine.

2. A method according to Claim 1, **characterised in that**, for monitoring and regulating purposes, measurement of the $NO_x$-concentration in the exhaust gas also takes place downstream of the catalytic converter.

3. A method according to Claim 1, **characterised in that** an ideal-actual comparison is carried out between the calculated reducing agent quantity and that fed to the exhaust gas, the actual value of the reducing agent feed quantity being determined by means of a sensor or measuring element arranged at an appropriate location.

4. A method according to Claim 1, **characterised in that**, as an indicator of whether the actual current exhaust gas quantity agrees with the stored reference values of the exhaust gas quantity, the current temperature of the intake air during the internal combustion engine operation is detected by means of a sensor and compared with predetermined reference values, and - if necessary - is taken into consideration in accordance with regulation technology for correction of the reducing agent rate to be metered into the exhaust gas.

5. A method according to Claim 1, **characterised in that** the density of the supplied liquid reducing agent is detected by sensor, compared with predetermined reference values and, depending on the result of this ideal-actual value comparison, any necessary correction of the reducing agent quantity to be metered into the exhaust gas is carried out.

6. A method according to Claim 1, **characterised in that** aging deriving from the operating life of the internal combustion engine and of the catalytic converter, and thus an accompanying decrease in activity of the catalytic converter, is taken into consideration in accordance with regulation technology by a corresponding change of the reducing agent rate to be metered into the exhaust gas.

7. A method according to Claim 1, **characterised in that** the ascertained reducing activity of a reference catalytic converter is used in the case of a varying reducing agent concentration to optimise the reducing agent metering.

8. A method according to one of Claims 1 to 7, **characterised by** application thereof in connection with an internal combustion engine operated in a dynamic or high-dynamic manner, which is incorporated as drive source in stationary installations or vehicles, motor vehicles, commercial vehicles, in particular lorries of every type of construction and use, and buses.

## Revendications

1. Procédé de dosage d'un agent de réduction, en particulier de la l'urée ou une solution d'urée aqueuse, dans un gaz d'échappement contenant de l'oxyde d'azote d'un moteur à combustion interne dans l'espace dans le tuyau de gaz d'échappement avant un système de catalyseur avec au moins une activité de réduction de $NO_x$, ce catalyseur présentant une faible capacité de chauffage et une faible capacité de stockage pour l'agent de réduction, au cours duquel on utilise comme paramètres de régulation pour le dosage de l'agent de réduction les valeurs spécifiques au moteur déterminées en fonction d'un moteur à combustion interne de référence de la concentration de NOx et de quantité de gaz d'échappement, ou encore les valeurs spécifiques au moteur déterminées en fonction d'un moteur à combustion interne de référence de la quantité de gaz d'échappement et de la concentration de $NO_x$ déterminée à partir des données, lors du fonctionnement du moteur à combustion interne, et saisie par un capteur placé dans le débit de gaz d'échappement devant le catalyseur, ainsi qu'au moins encore la température actuellement détectée du gaz d'échappement, lors du fonctionnement du moteur à combustion interne, et le cas échéant encore la concentration d'agent de réduction, et au cours duquel une vitesse d'agent de réduction est calculée à partir de ces paramètres,
**caractérisé en ce que**
cette vitesse d'agent de réduction ainsi obtenue subit une correction dynamique ou très dynamique en fonction des modifications de l'état de charge saisi du moteur à combustion interne, et une quantité d'agent de réduction adaptée en conséquence est amenée dans le débit du gaz d'échappement, dans lequel la température du gaz d'échappement régnant à l'entrée du catalyseur pendant une durée précise, le cas échéant variable, avant l'instant de mesure, peut également être prise en considération, en plus de la température du gaz d'échappement saisie par le capteur, dans le cas d'une correction dynamique de la vitesse d'agent de réduction, ou encore dans lequel la vitesse de modification de l'état de charge du moteur à combustion interne peut être prise en considération dans le cas d'une correction très dynamique de la vitesse d'agent de réduction.

2. Procédé selon la revendication 1,
**caractérisé en ce qu'**
une mesure de la concentration de $NO_x$ est effectuée dans le gaz d'échappement et également en dehors du catalyseur à des fins de contrôle et de réglage.

3. Procédé selon la revendication 1,
**caractérisé en ce qu'**
une comparaison de la valeur de consigne et de la valeur réelle, entre la quantité d'agent de réduction calculée et la quantité d'agent de réduction amenée dans le gaz d'échappement est effectuée, la valeur réelle de la quantité d'alimentation de l'agent de réduction étant définie à l'aide d'un capteur ou d'un organe de mesure placé à l'endroit adéquat.

4. Procédé selon la revendication 1,
**caractérisé en ce qu'**
à titre indicatif, si la quantité réelle de gaz d'échappement actuelle coïncide avec les valeurs de référence de la quantité de gaz d'échappement stockée, la température actuelle de l'air d'aspiration est saisie, au cours du fonctionnement du moteur à combustion interne, à l'aide d'un capteur et est comparée aux valeurs de référence précitées et, si nécessaire, ce processus est pris en considération d'un point de vue technique de régulation pour une correction de la vitesse d'agent de réduction à insérer par dosage dans le gaz d'échappement.

5. Procédé selon la revendication 1,
**caractérisé en ce que**
la densité de l'agent de réduction liquide stocké est saisie à l'aide d'un capteur, est comparée aux valeurs de référence précitées et, suivant le résultat de cette comparaison entre la valeur de consigne et la valeur réelle, une correction éventuellement nécessaire de la quantité d'agent de réduction à insérer par dosage dans le gaz d'échappement est entreprise.

6. Procédé selon la revendication 1,
**caractérisé en ce qu'**
un vieillissement dépendant de la durée de fonctionnement du moteur à combustion interne et du catalyseur ainsi qu'une baisse d'activité ainsi associée du catalyseur est prise en considération, selon la technique de régulation, grâce à une modification correspondante de la vitesse d'agent de réduction à insérer par dosage dans le gaz d'échappement.

7. Procédé selon la revendication 1,
**caractérisé en ce que**
l'activité de réduction déterminée d'un catalyseur de référence est utilisée pour optimiser le dosage d'agent de réduction dans le cas d'une concentration différente de l'agent de réduction.

8. Procédé selon l'une des revendications 1 à 7,
**caractérisé par**
son application en fonction d'un moteur à combustion interne entraîné de manière dynamique ou très dynamique qui est inséré comme source motrice dans des systèmes stationnaires ou dans des véhicules, des véhicules automobiles, des véhicules utilitaires, en particulier les poids lourds de toute structure et de tout mode d'emploi et les omnibus.

Fig1

Fig 2

Fig 3

EP 0 898 061 B1

EP 0 898 061 B1

$T_{Aus}$

$T_{Ein}$

$T_{Mittel}$

$T_A$

$C_{NO}$

$\Delta C_{VAbgas=const.}$

$\Delta C_{Korrigiert}$

$\Delta \dot{n}_{NOx}$

$\dot{V}_{Abgas,Betrieb}$

$\varepsilon$

$\Delta t$

$n$

$Qe$

$\dot{m}_{Kraftstoff}$

$\dot{V}_{Abgas,Saug}$

Umrechnung

$n$

$pLL$

$\dot{V}_{Luft}$

$\dot{V}_{tatsächlich}$

$n$

$pLL$

$\eta_{Liefergrad}$

$\dot{m}_{(NH2)2CO,Zufuhr}$

Fig 4

EP 0 898 061 B1

$C_{NO,aus}$

$C_{NO,ein}$

$\Delta C_{real}$

$T_{Aus}$

$T_{Ein}$

$T_{Mittel}$

$T_A$

$\Delta C_{VAbgas=const.}$

$\dot{V}_{Abgas,Betrieb}$

$\varepsilon$

$\Delta C_{Korrigiert}$

$\Delta \dot{n}_{NOx}$

$\Delta t$

n

Qe

$\dot{m}_{Kraftstoff}$

n

pLL

$\dot{V}_{Luft}$

n

pLL

$\eta_{Liefergrad}$

$\dot{V}_{tatsächlich}$

$\dot{V}_{Abgas,Saug}$

Umrechnung

$\dot{m}_{(NH2)2CO,Zufuhr}$

Fig 5

## GD-Kat
## Vergleich Zellwandstärke

30 µm Beschichtung

Metallträger-Kat

Keramik-träger-Kat

Voll-Kat

| | | | |
|---|---|---|---|
| Zellenzahl (cpsi) | 100 | 400 | 400 |
| Wandstärke (µm) | 500 | 140 | 30 |

Fig 6

## NO$_x$-Spitze bei einem plötzlichen Lastwechsel

Fig 7

## Wandern einer Kaltfront durch den Katalysator bei einem plötzlichen Lastwechsel

*Abgastemperatur am Kateingang TEin, bzw. am Katausgang TAus*

*Drehzahl N, Drehmoment M*

Zeit

Legend:
- TEin
- TAus
- N
- M

Fig 8